# EUROPEAN PATENT APPLICATION

(11) **EP 3 958 198 A1**
(43) Date of publication of application: **23.02.2022**
(21) Application number: 20191739.0
(22) Date of filing: 19.08.2020
(51) Int. Cl.: G06Q 10/08, G06Q 10/02, G06Q 50/30

(54) **METHOD AND SYSTEM FOR TRANSFER OF BAGGAGE BETWEEN CONNECTING FLIGHTS**

(71) Applicant: Airsiders GmbH, 10435 Berlin (DE)
(72) Inventor: Al-Eryani, Ashraf, D-10317 Berlin (DE); Karadag, Yavuz, D-10407 Berlin (DE)
(74) Representative: Plougmann Vingtoft a/s

(57) **Abstract**

The invention relates to a method and a system for transfer of baggage between connecting flights from airlines not having an arrangement for baggage check-through. The passenger books a journey and check-in at a departure airport, shifts to a connecting flight at a transit airport and completes the journey at a destination airport. The passenger check-in the baggage at the departure airport and collects the baggage at the destination airport. The journey comprises transfer of baggage at a transit airport between connecting flights from airlines, not having an arrangement for baggage check-through, by having no alliance, codeshare, or interline agreement between one another.

## Description

### FIELD OF THE INVENTION

The present invention relates to a method and a system for transfer of baggage between connecting flights from airlines not in an alliance having an arrangement for baggage check-through.

### BACKGROUND OF THE INVENTION

When travelling from a departure airport to a destination airport with one or more transits airports in between with shift of flights, baggage is to be moved from one flight to the next.

When travelling with an airline or different airlines in an alliance the transport of baggage at a transit airport is performed by the airport baggage handling system and ground personal at the airport, and the traveller do not need to take care of the baggage. Thus, an airline alliance may be defined as an aviation industry arrangement between two or more airlines agreeing to cooperate on a substantial level, for example about baggage but also about other topics. These alliances may provide marketing branding to facilitate travellers enjoying inter-airline codeshare connections. Some examples of airlines alliances currently include: Star Alliance, SkyTeam, Oneworld, etc.

However, when travelling with different airlines, which is not in an alliance, not having codeshare, or interline agreements between one another, the traveller have to get hold of the baggage at the transit airport and check the baggage in for the next flight.

This is a time consuming and troublesome for the traveller, the traveller needs to calculate with using more time at the transit airport and may have to take a later flight to be able to have enough time for getting the baggage and check-in the baggage in for the next flight.

Hence, it would therefore be advantageous, if the traveller would not have to get hold of the baggage at a transit airport and checking the baggage in for the next flight, when the traveller travels with airlines not in an alliance having an arrangement for baggage check-through.

Hence, an improved method or system for handling baggage at transit airports when travelling with airlines not in an alliance having an arrangement for baggage check-through would be advantageous.

### OBJECT OF THE INVENTION

It may be seen as an object of the present invention to provide a method or a system for handling baggage at transit airports that solves the above mentioned problem.

### SUMMARY OF THE INVENTION

Thus, the above described object and several other objects are intended to be obtained in a first aspect of the invention by providing a method for transfer of baggage between connecting flights, wherein a passenger books a journey and check-in at a departure airport, shifts to a connecting flight at one or more transit airport(s) and completes the journey at a destination airport, and the passenger check-in the baggage before the journey at the departure airport or remotely and collects the baggage after the journey,
wherein,
the journey comprises transfer of baggage at the one or more transit airport(s) between connecting flights from at least two airlines not having an arrangement for baggage check-through,
the method comprises:
- providing a computer-implemented travel control system,
- receiving booking information of a journey from a booking portal, or any other source generating booking information, connected to a computer-implemented travel control system,
- receiving, when the journey is booked, passenger data generated for each connecting flight by the respective airlines,
- storing the booking information and the passenger data in the travel control system, and
- updating one or more databases for a departure control system and/or airport control systems at the departure airport and/or the one or more transit airport(s) with booking data comprising the passenger data.

When a passenger is travelling by airplane and the journey comprises shifting between connecting flights at transit airports, there can be a problem with transfer of baggage between the connecting flights at the transit airports. If the journey comprises shifting between connecting flights from at least two airlines, which is not in an alliance having an arrangement for baggage check-through, the baggage is not automatically being transferred from the arriving flight to the connecting flight. The passenger then have to pick up the baggage at the arrival carrousel and check-in in baggage again for the connecting flight.

The problem is solved by the computer implemented travel control system. The travel control system makes it possible for a passenger to book a journey using a booking portal connected to or hosted by the travel control system. The booking portal may be integrated on airlines sales pages or on sales pages of online travel agencies. The travel control system is a computer-implemented system providing an application programming interface (API). Booking portals may be connected to the travel control system integrating the API in the booking portal.

The journey may alternatively be booked using any other source of booking. Preferable, the source of booking is connected to the travel control system. The other source of booking could be at an airport or at a travel agency where personal from the airport or the travel agency is making the actual booking using software connected to the travel control system. Further, the passenger may book a journey by a source of booking not connected to the travel control system, or the passenger may book two tickets separately on airline websites or booking portals. In this case the passenger can share his/her booking information with the provider of the travel control system, either directly, using a website or an app or by sending an email, or via an intermediary system e.g. the airport, the airline, a departure control system etc. If the provider receives the booking information in a form where the booking information is not automatically updated in the travel control system, for instance by email, then the provider of the travel control system updates the travel control system accordingly, generating the booking information, using an interface, available for the provider.

When the passenger is planning a journey, and the passenger is booking a journey, using a booking portal, connected to and integrated with the travel control system, the travel control systems receives information of flights from different airlines and makes the information available in the booking portal. The passenger then can search for flights for his journey and selects between flights from different airlines. When booking a journey including at least two flights, requiring shifting flights at a transit airport, the passenger may select flights from at least two airlines not having an arrangement for baggage check-through.

When the passenger check-in the baggage this is typically done at a check-in station at the departure airport. Alternatively, the check-in of the baggage can be done remotely, for instance, at home by a pick-up service, picking up the baggage at the home of the passenger.

When a journey is booked, the travel control system receives information of the booking from the booking portal, or any other source generating booking information, further, the respective airlines receives the booking in the airlines booking system. The airlines then transmits passenger data usually in form of a passenger name record to the booking portal and as the portal is connected to and integrated with the travel control system; the travel control system receives the passenger data for each flight. The booking information and passenger data received by the travel control system is stored in a database in the travel control system.

The airlines may not transmit the passenger data automatically. Therefore, according to an embodiment, the method may comprise requesting passenger data from the respective airlines for each connecting flight, when the journey is booked.

The airlines also updates databases for the departure or airport control systems at the airports with the passenger data. However, as the airlines are not having an arrangement for baggage check-through between connecting flights, the departure or airport control systems do not receive any data on baggage check-through. Each airline updates the databases only with the information for the specific flight from the specific airline.

The travel control system, usually run by a third part, updates the one or more databases at the airports with the missing information of baggage check-through.

The term "baggage" covers any item, like a bag, a suitcase, a bag pack, a golf bag or other kind of baggage or luggage that can be transported on an airplane. The term "baggage" and the term "bag" may be used interchangeable in this document.

The skilled person understands the expression "not having an arrangement for baggage check-through" covers any connection, where the airlines may have no alliance, codeshare, interline agreement or any other arrangement or agreement between one another for arranging baggage check-through between connecting flights. Therefore, the passenger would have to, at a transit airport, to pick up his baggage at the arrival carousel and check-in the baggage again for the next connecting flight. "Not having an arrangement for baggage check-through" is to be understood as information required for baggage being transported at the transit airport form the incoming flight to the connecting flight is not updated in the departure system or in the airport control systems by the airlines.

The airlines, not having an arrangement for baggage check-through, may be part of an agreement wherein the airlines for the connecting flights consent that data from the travel control system can be used to update the departure control system and/or the airport control system by a third part.

The journey comprises transfer of baggage at the one or more transit airport(s) between connecting flights from at least two non-alliance airlines. The term "non-alliance" covers any connection, where the airlines have no alliance, codeshare, or interline agreement between one another.

The departure control system (DCS) is a well-known term in the industry, but in context of this document, the term can cover any control system at the departure airport. The airport control system is often known in the industry as high level control (HLC), in this document the more general term airport control system is used to cover any kind of computer system in an airport to control and guide the transport of baggage and to tag and label baggage and to provide service to running the airport and guiding ground personal etc.

Using commonly used terms, the travel control system updates a departure control system (DCS) of the departure airport and/or a high-level control (HLC) of the one or more transit airport(s) with booking data comprising the passenger name record (PNR).

The departure control system is a control system at the departure airport controlling check-in and updating airport control systems that the baggage is transported to the right airplane. If the departure control system have the information, the departure control system can also transmit updates to transit airports to update the airport systems at the transit airports to ensure baggage is transported to the right connecting flight at the transit airport.

The airport control systems ensures, at a transit airport, that the baggage is transported from an incoming flight to the correct connecting flight. However, this only works if the airport control systems have the information of the connecting flight. If the airport control systems does not have information of the connecting flight, the baggage ends up at the arrival carousel and the passenger will have to pick up the baggage at the arrival carousel and again check-in the baggage for the connecting flight.

The provider of the travel control system has an agreement with the different airports giving access to the departure control system and the airport control systems allowing the travel control system to update the systems with booking data needed for check-through of baggage at transit airports.

The travel control system updates check-through labelling information of the specific baggage in the departure control system and/or airport control systems.

The at least two airlines, not having an arrangement for baggage check-through, are part of an agreement or an organisation allowing the travel control system to update the departure control system and/or the airport control system with booking data.

The booking data comprises a booking reference, the passenger name, and the data for each flight on the journey and check-through labelling information. When updating one or more databases for a departure control system and/or airport control systems at the departure airport and/or the one or more transit airport(s) with booking data comprising the passenger data, the data being updated is the databases is the data for each connecting flight needed for transfer of baggage from an incoming flight to a connecting flight.

When the passenger booking a journey has decided the flights for the journey and the passenger has booked the journey, passenger data is generated for each connecting flight by the respective airlines. The passenger data usually comes as a passenger name record (PNR). The PNR comprises the name of the passenger and the data about the flight, the airports the flight is flying between and the time of departure and arrival of the flight. The data from the PNR's with passenger data are transmitted from the booking systems of the different airlines to the travel control system and stored in the travel control systems database.

Booking data, comprising the passenger data for each flight, is transmitted from the travel control system to the departure airport and/or one or more transit airports. The transmitted booking data is used to update the departure control system of the departure airport and/or the airport control systems of the transit airports. The travel control system have access to the departure control system and or the airport control systems and the travel control system may login to and update the departure control system and the airport control systems of the airports.

According to an embodiment, the method comprises that at check-in the baggage is tagged with a bag tag, and the bag tag comprises information indicating baggage transfer towards the destination airport.

When the baggage is checked in at the departure airport, the baggage is tagged with a bag tag; the bag tag comprises information directing the baggage towards the destination airport.

The travel control system can work in two scenarios. In the first scenario, the bag tag comprises information for the entire journey, but it is also possible in a second scenario that the bag tag only comprises information for the first step of the journey towards the destination airport; the first step is the information for the first flight to the first transit airport. In this case, at the transit airport, the bag tag is replaced with a bag tag for the next step towards the destination airport.

The bag tag is usually a tag attached to the baggage comprising physical letter like "CPH" or "BLL" indicating the airport to which the baggage is transferred. However, the bag tag may be electronic, for instance an electronic chip, in that case the bag tag is not replaced but reprogrammed with information for the next step. The bag tag can also be a fall back tag, in case the computer systems at the airport is down and cannot write a normal bag tag. The fall back tag only contains information at where in airport to transfer the baggage, for instance to a gate. Further, the bag tag can be information stored in a database for identifying the baggage from external characteristics, in this case to actual tag is added to the baggage, the tag is features stored in the database.

In the first scenario, the travel control system updates the departure control system at the departure airport when the journey is booked, and the departure control system takes care of updating airport systems at transit airports. In the first scenario, the travel control system has access to the departure control system at the departure airport and are able to update the departure control system with the booking data so that the departure control system is updated with the itinerary for the entire journey with information of transit airports and connecting flights. When the departure control system has data for the entire journey, it can update the airport control systems at the transit airports.

In the second scenario, the departure control system of the departure airport only have information for the first step of the journey; therefore, the departure control system cannot update the airport systems for the transit airports. However, the travel control system have access to the airport systems of the transit airports and are able to update the airport systems with booking data comprising check-through data. The check-through data makes it possible for the transit airport to be able to handle transporting the baggage from the arriving flight to the connecting flight. However, at check-in at the departure airport, the bag tag covers only the first step of the journey, and therefore it is required, at each transit airport that the baggage is given special treatment by taking the baggage to a relabelling station for replacement of the bag tag. The airport systems at the transit airport having booking data comprising check-through data for transporting baggage from the arriving flight to the next flight and therefore new bag tags can be written at the relabelling stations.

Therefore, one of the objects of this invention is achieved be the travel control system taking care of updating the departure control system and or the airport systems to ensure the baggage is transported from the incoming flight to the connecting flight.

Now further describing the first scenario, according to an embodiment, the method comprises that the bag tag comprises information indicating baggage transfer through the one or more transit airport(s) to the destination airport.

In this case, the bag tag comprises information for the entire journey and the baggage will be handled by the baggage handling systems at the transit airports.

According to an embodiment, the method comprises that the databases at the departure airport after the journey is booked is updated with the booking data from the travel control system, including check-through requirement for the one or more transit airport(s).

When the departure control system at the departure airport is updated with booking data including check-through requirements from the travel control system, the departure control system updates the airport systems of the transit airports with the check-through requirements so at the transit airport the baggage is taken from the transfer compartment in the airplane and transferred to the next airplane as normal check-through baggage on the transfer belts in the transit airport.

Now further describing the second scenario, according to an embodiment, the method comprises that the bag tag comprises information for transfer of the baggage to the next airport of the one or more transit airport(s), and the baggage is labelled with a transfer bag label, the transfer bag label indicates that the baggage is a transfer bag, and at the one or more transit airport(s), the baggage labelled with the transfer bag label, is tagged with a bag tag for the next airport on the journey of the passenger.

In this case, the bag tag only comprises information for the next airport. If the next airport is a transit airport, the bag tag needs to be replaced by a new bag tag for the next step of the journey. This requires special handling of the baggage. Therefore, the baggage is labelled with a transfer bag label. The transfer bag label is a label or a tag put on the baggage to mark the baggage as a transfer bag. The transfer bag label may be a visible tag made of for instance paper or plastic, but it may also be an electronic device with a programmable electronic chip that can be identified by scanners from the baggage handling system.

In this document, the term "transfer bag label" is used to distinguish the transfer bag label from the bag tag, which in this document is the bag tag put on the baggage at check-in, comprising the information about the airport to which the baggage is transported. The transfer bag label is added to the baggage either at check-in or at a relabelling station.

According to an embodiment, the method comprises that at the one or more transit airport(s), if the baggage is labelled with a transfer bag label and the next airport is the destination airport, the transfer bag label is removed and the baggage is tagged by the bag tag as direct baggage.

If the next airport is the destination airport, the transfer bag label is removed at the transit airport typically at the relabelling station. For the last step of the journey to the destination airport, the baggage is treated as normal baggage going to the destination airport and requires no further special treatment.

According to an embodiment, the method comprises that the databases, comprising data for the airport control system of the baggage handling systems at the departure airport and/or the one or more transit airport(s), are updated with the booking data comprising the passenger data from the travel control system after the journey is booked.

When a journey is booked, the airport control systems of the transit airports are updated with the booking data from the travel control system to handle the transport of the baggage between connection flights.

According to an embodiment, the method comprises that if the next airport is the destination airport, the baggage is loaded on to the airplane as direct baggage, and if the next airport is one of the one or more transit airport(s), the baggage is loaded on to the airplane as transfer baggage.

In an airplane, the baggage is usually sorted as either direct baggage or transfer baggage, as it will be understood by a person skilled within airport baggage handling. The direct baggage is baggage that is going to the arrival carousel in the destination airport for the passenger to collect the baggage. Transfer baggage is baggage for being transported to a connecting flight at a transit airport.

According to an embodiment, the method comprises that at the one or more transit airport(s), if the baggage is labelled with a transfer bag label and the next airport is another of the one or more transit airport(s), the baggage remains labelled as transfer baggage with the transfer bag label or is relabelled with another transfer bag label.

Baggage labelled with a transfer bag label is, when it arrives to a transit airport, taken to a relabelling station and if the baggage is going to another transit airport, the baggage remains labelled as transfer baggage by either keeping the transfer bag label or replacing the transfer bag label with another transfer bag label.

According to an embodiment, the method comprises that at the departure airport, the airport control system identifies the baggage as transfer baggage needing a transfer bag label; the baggage is transferred to a relabelling station to be labelled with a transfer bag label.

At the departure airport after check-in, if the baggage was not labelled with a transfer bag label at check-in, the airport identifies the baggage as transfer baggage and the baggage handling system route the baggage to the relabelling station. At the relabelling station, the personal at the relabelling station mark the baggage with a transfer bag label and returns the baggage to the baggage handling system, where the baggage now is routed to the departure airplane as a transfer bag.

According to an embodiment, the method comprises that at arrival at the one or more transit airport(s) the baggage labelled with the transport bag label is transported to the relabelling station, where the baggage is tagged with a bag tag for the next airport.

When arriving at a transit airport the bag tag needs to be replaced with a bag tag for the next airport. At the transit airport, the baggage is transported by the baggage handling system to the relabelling station, where the bag tag manually be the personal is removed and replaced with a bag tag for the next airport. The next airport can be another transit airport or the next airport can be the destination airport.

According to an embodiment, the method comprises that at the one or more transit airport(s), when a ground handler observe the baggage labelled with the transfer bag label, the ground handler takes the baggage to a transfer baggage handling system (BHS).

According to an embodiment, the method comprises at the transfer baggage handling system, the airport control system identifies the baggage for relabelling and the baggage is transferred to the relabelling station.

When the baggage is in the baggage handling system, the airport identifies the transfer bag label and transfer the baggage to the relabelling station.

According to an embodiment, the method comprises that at the relabelling station a bag tag for the next airport is written, based on information in the passenger data, and tagged to the baggage.

When the baggage reaches the relabelling station, the personal at the relabelling station accesses the airport control system. The airport control system have the check-through data in its database and the information for the next airport is written on a new bag tag. The personal removes the old bag tag and replaces it with the new bag tag and the returns the baggage to the BHS for transporting the baggage to the connecting flight.

In a second aspect, the invention relates to a computer-implemented travel control system, wherein the travel control system is arranged to support the transfer of baggage between connecting flights, wherein a passenger books a journey and check-in at a departure airport, shifts to a connecting flight at one or more transit airport(s) and completes the journey at a destination airport, and
the passenger check-in the baggage before the journey at the departure airport or remotely and collects the baggage after the journey,
the journey comprises transfer of baggage at the one or more transit airport(s) between connecting flights from at least two airlines not having an arrangement for baggage check-through,
wherein the travel control system is further arranged to support:
- receiving booking information of a journey from a booking portal, or any other source generating booking information, connected to the travel control system,
- receiving, when the journey is booked, passenger data generated for each connecting flight by the respective airlines,
- storing the booking information and the passenger data in the travel control system, and
- updating one or more databases for a departure control system and/or airport control systems at the departure airport and/or the one or more transit airport(s) with booking data comprising the passenger data.

The computer implemented travel control system is usually implemented on a computer or a server running at a remote site. The travel control system is supporting the process of booking a journey and getting the baggage from the departure airport to the destination airport without the passenger having to get hold of the baggage at transit airports. The travel control system supports check-through of baggage at transit airports.

The travel control system server or computer is servicing booking portals so that booking portals can use information provided by the travel control system. The travel control system are getting information about flights from airlines and is providing this information for booking, so when a passenger uses a booking portal the passenger can get information about flights available for planning the journey. When a passenger has decided which flight to order, the passenger orders the journey at the booking portal and the booking portal, which is connected to and integrated with the travel control system, transmits booking information to the travel control system. The travel control system then saves the data in a database. Further, the travel control system receives passenger data from the respective airlines providing the different flights of the journey. Either the passenger data goes directly from airlines booking systems to the travel control system or the passenger data goes to the travel control system via the booking portal.

When the travel control system has all the relevant booking data and passenger data for the flights of the journey, the travel control system supports updating the one or more databases at the departure airport and/or the transit airports. At the departure airport, the travel control system may log in to the departure control system or other airport control systems to update the booking data already stored by the airlines. The airline providing the first flight on the journey may have stored information about the passenger and the first transit airport in the departure control system, but not any information about connecting flights or baggage transfer.

The travel control system then in the first scenario updates the database for the departure control system to include information about connecting flights and the departure control systems may update airport control systems at transit airports with baggage check-through information. In the second scenario, the travel control system supports updating the database in the transit airports with check-through information, as described in the first aspect of the invention.

According to an embodiment, the databases for a departure control system or an airport control system at the departure airport - after the journey is booked - from the travel control system are updated with the booking data, comprising check-through requirement for the one or more transit airport(s).

According to an embodiment, the databases of the airport control systems of the baggage handling systems at the departure airport and the one or more transit airport(s) are updated - after the journey is booked - with the booking data, comprising the passenger data, from the travel control system.

In a third aspect, the invention relates to a computer program for a travel control system comprising instructions which, when the program is executed by a computer, cause the computer to carry out running a travel control system arranged to support the transfer of baggage between connecting flights, wherein a passenger books a journey and check-in at a departure airport, shifts to a connecting flight at one or more transit airport(s) and completes the journey at a destination airport, and the passenger check-in the baggage before the journey at the departure airport or remotely and collects the baggage after the journey,
the journey comprises transfer of baggage at the one or more transit airport(s) between connecting flights from at least two airlines not having an arrangement for baggage check-through,
wherein the travel control system is further arranged to support:
- receiving booking information of a journey from a booking portal, or any other source generating booking information, connected to the travel control system,
- receiving, when the journey is booked, passenger data generated for each connecting flight by the respective airlines,
- storing the booking information and the passenger data in the travel control system, and
- updating one or more databases for a departure control system and/or airport control systems at the departure airport and/or the one or more transit airport(s) with booking data comprising the passenger data.

The travel control system is implemented as a computer program with instructions when run on a computer supports the travel control system as described in the first and second aspect of the invention.

In the fourth aspect the travel control system is implemented on a computer, for instance on a server placed in a server park. Computers via the internet from all over the world may access the server. The server runs the travel control systems and are able to connect to departure control systems and high level controls in airports all over the world, and it can receive bookings from passengers and it can connect to airline booking systems to receive booking data comprising passenger name records

In a fifth aspect, the invention relates to a computer program for a booking portal comprising instructions which, when the program is executed by a computer, cause the computer to interacts with a computer-implemented travel control system arranged to support the transfer of baggage between connecting flights, wherein a passenger books a journey and check-in at a departure airport, shifts to a connecting flight at one or more transit airport(s) and completes the journey at a destination airport, and
the passenger check-in the baggage before the journey at the departure airport or remotely and collects the baggage after the journey,
the journey comprises transfer of baggage at the one or more transit airport(s) between connecting flights from at least two airlines not having an arrangement for baggage check-through,
wherein the travel control system is further arranged to support:
- receiving booking information of a journey from a booking portal, or any other source generating booking information, connected to the travel control system,
- receiving, when the journey is booked, passenger data generated for each connecting flight by the respective airlines,
- storing the booking information and the passenger data in the travel control system, and
- updating one or more databases for a departure control system and/or airport control systems at the departure airport and/or the one or more transit airport(s) with booking data comprising the passenger data.

A booking portal can interact with the travel control system, the booking portal can be running on a computer, where a passenger from home can book a journey, or the booking portal can be running on a computer at an airport from where a passenger can book a journey, or the booking portal can be an app which may be run on a mobile phone and the passenger can use the app to book a journey. The booking portal is interacting with the travel control system, the booking portal can require data on available flights for a destination, the travel control system may transmit data on available flights to the booking portal, and the booking portal can place a booking order at the travel control system. Further, the booking portal can be used to get updates on the status of the ordered flights and receive information on delays and status of the baggage.

In another aspect, the invention relates to a computer program product being adapted to enable a computer system comprising at least one computer having data storage means in connection therewith to control an travel control system according to the first and second aspect of the invention, such as a computer program product comprising instructions which, when the program is executed by a computer, cause the computer to carry out the first and second aspect of the invention.

This third, fourth and fifth aspect of the invention is particularly, but not exclusively, advantageous in that the present invention may be accomplished by a computer program product enabling a computer system to carry out the operations of the system of the aspects of the invention when down- or uploaded into the computer system. Such a computer program product may be provided on any kind of computer readable medium, or through a network.

The individual aspects of the present invention may each be combined with any of the other aspects. These and other aspects of the invention will be apparent from the following description with reference to the described embodiments.

### BRIEF DESCRIPTION OF THE FIGURES

The method and system according to the invention will now be described in more detail with regard to the accompanying figures. The figures show one way of implementing the present invention and is not to be construed as being limiting to other possible embodiments falling within the scope of the attached claim set.
Figure 1 illustrates a diagram for booking a journey and updating the travel control system and the systems at the departure airport and transit airports with booking data.
Figure 2 illustrates the journey from departure airport to destination airport.
Figure 3 illustrates the first scenario of transporting the baggage from departure airport to destination airport.
Figure 4 illustrates the second scenario of transporting the baggage from departure airport to destination airport.
Figure 5 illustrates the passenger name record trasmitted from airline booking system to the travel control system.

### DETAILED DESCRIPTION OF AN EMBODIMENT

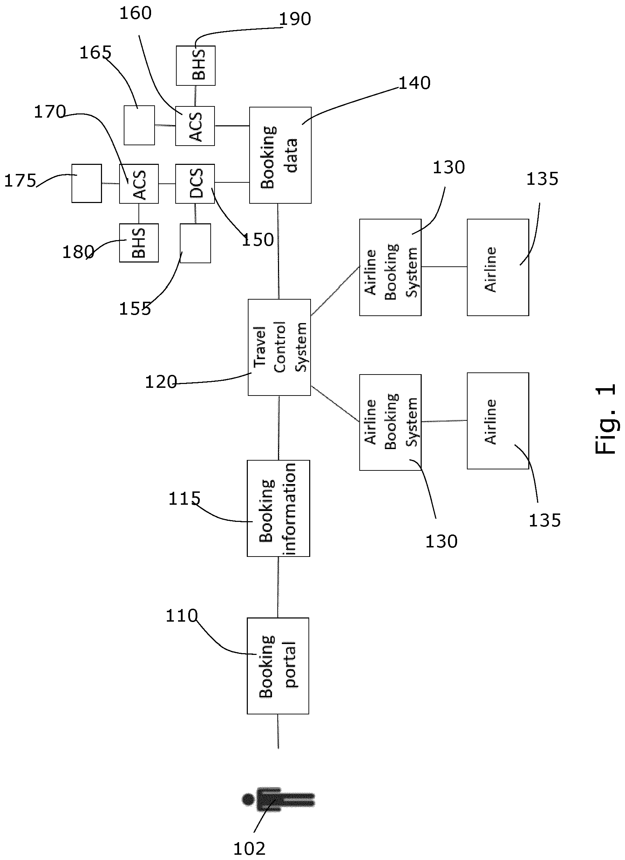

Figure 1 illustrates that when a passenger 102 wants to go out on a journey the passenger 102 may book the journey using a booking portal 110. The journey may comprises one or more shift to connecting flights and the connecting flight may be from different airlines without an alliance, codeshare, or interline agreement between one another.

The booking portal 110 is connected to the travel control system 120 exchanging travel information 115. The travel control system 120 connects to the airlines booking systems 130 of different airlines. After booking, flights at an airline booking system 130 passenger data, usually in the form of passenger name records, are generated and the travel control system 120 receives data related to the booking from the airline booking system 130. The information received from the airlines are stored as part of the booking data 140 in the travel control system 130.

The airlines usually updates travel information and booking data in the departure control system and/or other airport control systems, but not having an agreement or even knowledge about connecting flights, the airlines do not update information for baggage check-through.

Data relating to transport of baggage and baggage check-through in the booking data 140 is by the travel control system 120 transmitted to, and updated directly in, the departure control system 150 or other airport control systems at the departure airport and/or in airport control systems 160 in transit airports.

At the departure airport, the booking data 140 for the passenger and the baggage check-through is stored in databases 155, 175 for the departure control system 150 and the airport control systems 170. At transit airports, the data is stored in databases 165 for the airport control systems 160. The airport control system can also include a departure control system at the transit airports even though this is not shown in Fig. 1.

The airports also have baggage handling systems 180, 190 using data from relevant databases 155, 165, 175. The baggage handling systems 180, 190 can be independent systems or they can be part of the airport control systems 160, 170 or the departure control systems 150.

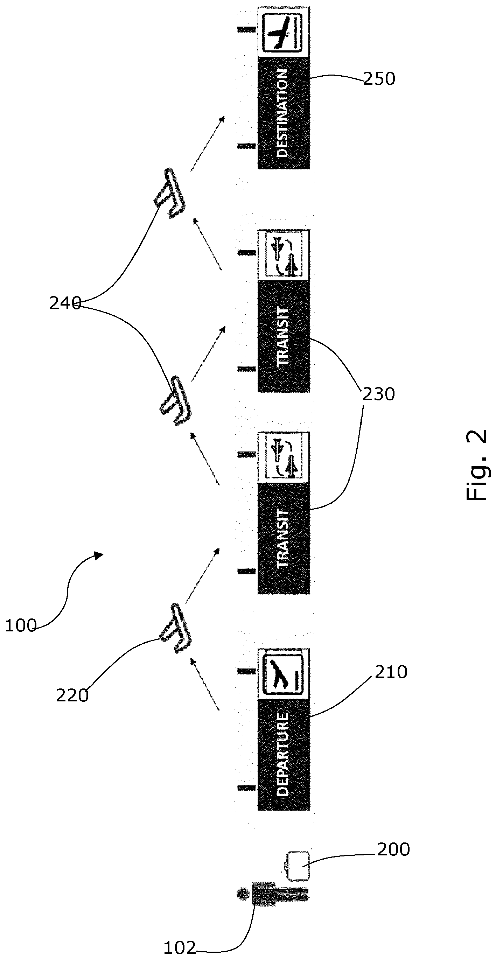

Fig. 2 illustrates the journey 100. The passenger 102 check-in the baggage 200 at the departure airport 210. The baggage 200 and the passenger 102 goes with the flight 220 from the departure airport to a transit airport 230. They journey 100 may comprise several transit airports 230. At the transit airport 230 the passenger 102 goes to a connecting flight 240 and the baggage 200 is transported through the airport according to the method of the invention and goes on to the connecting flight 240. The connection flight 240 flies either to another transit airport 230 or to the destination airport 250. At the destination airport 250, the passenger 102 collects the baggage 200 and leaves the airport.

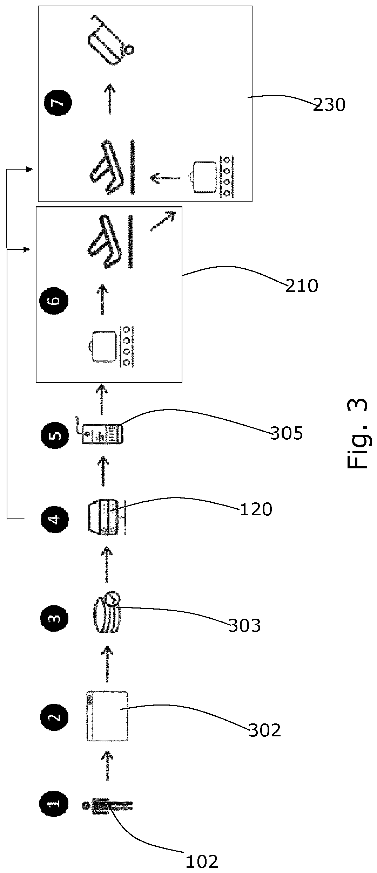

Fig. 3 illustrates the seven steps of scenario 1 for how the baggage is transported from the departure airport to the destination airport. The skilled person will understand that the steps may be combined or performed in a different order than described below. In scenario 1, the travel control system 120 is integrated with the departure control system 150 and other airport control systems 170 of the departure airport in agreement with partner airlines.

The process comprises the following steps.
1. The passenger 102 accesses an airline branded booking portal 110 hosted by the travel control system 120 but integrated on sales pages.
2. The passengers books virtual interline flight tickets 302 on one of the sales pages for flights that are normally not connected through interline/codeshare agreements. (APIs are delivered by two Airlines to the travel control system 120 in order to show this extra flight service to passenger in the booking portals web pages)
3. Passenger data 303 in the form of passenger name records (PNR) are generated for each flight after booking. Booking code and reference is generated for the PNRs by the two Airline booking systems 130 and transmitted to travel control system 120.
4. The travel control system 120 updates the departure control system 150 and if needed, updates other airport control systems 170 at the departure airport 210 with the complete passenger booking data 140. This data comprises information about the check-through requirement in transit airports 230.
5. The passenger 102 check-in at the departure airport 210 and gets a bag tag 305 that covers the baggage transfer at the transit airports 230 as both Airlines 135, 136 for the connecting flights consent that data from the travel control system 120 can update the check-through labelling and code and status of the specific baggage for the transfer passenger 102 at the control systems in the departure airport and the transit airports.
6. The baggage 200 is immediately and automatically handled as a transfer bag by the baggage handling system (BHS) 180 at the departure airport 210 and the ground handlers at the departure airport 210. The baggage goes to the transfer storage in the airplane 220 as the bar codes on the bag tag 305 designate this position of the baggage 200.
7. When the baggage 200 arrives at the transit airport 230, the baggage 200 is taken from the transfer compartment in the airplane 220 and transferred to the final destination airplane 240 as normal check-through baggage 200 on the transfer belt in the transit airport 230.

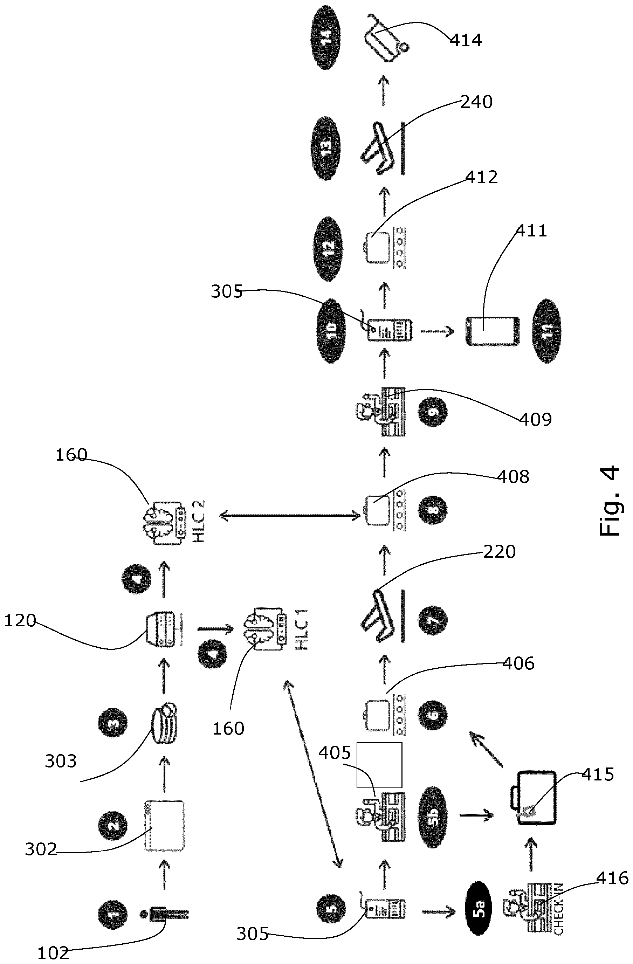

Fig. 4 illustrates the 14 steps of scenario 2 for how the baggage is transported from the departure airport 210 to the destination airport 250 through a transit airport 230. The skilled person will understand that the steps may be combined or performed in a different order than described below. In scenario 2, there is not a complete integration between the travel control system and the destination airports departure control system and partner airlines, but there is airport system integration between the travel control system 120 and the airport control systems. That there is not complete integration with the departure control system means the departure control system from the departure airport is not able to update airport control system at transit airports with baggage check-through information.

The process of scenario 2 comprises the following steps:
1. The passenger 102 accesses an airline branded booking portal 110 hosted by the travel control system 120 but integrated on sales pages.
2. The passenger 102 books virtual interline flight tickets 302 on one of the sales webpages for flights that are normally not connected through interline/codeshare agreements. (APIs are delivered by two Airlines to the travel control system in order to show this extra flight service to passenger in the sales web pages)
3. Passenger data 303, in the form of two sets of passenger name records (PNR), are generated for each flight after booking. Booking code and reference is generated for the PNRs by the two airline booking systems 130 and transmitted to the travel control system 120.
4. The travel control system 120 stores the passenger data 303 in form of the passenger name records (PNR) and automatically transmits these two sets of PNR data to the airport control systems 160, usually known as high-level controls (HLC), integrated with the baggage handling systems of the departure airport and the transit airports. Here the two sets of PNR data are the basic info for the routing of the baggage on the carousels once the baggage 200 is registered in the airport control systems via a bag tag scan.
5. The passenger 102 check-in at the departure airport 210 and gets a bag tag 305 for the first flight. This "normal" bag tag 305 designates that the transit airport 230 is the arrival airport and NOT a transit airport. From here the process can be either scenario A or B below
   **a.** Scenario A handling method - manual intervention at check-in. To avoid that the baggage goes to the arrival belt in the transit airport 230 the passenger's baggage is labeled with a separate visual transfer bag label 415 by check-in personnel 416 at the departure airport as "transfer bag".
      i. The check-in personnel 416 attaches a special transfer bag label 415 that the ground handling crew recognizes as a transfer bag label 415 that requires manual handling. *(GOTO section 6)*
   **b.** Scenario B handling method - automatic i.e. NO manual check-in handling.
      i. The check-in scanning of the baggage in the departure airport (based on airport control systems and baggage handling system tag scanning) when the baggage runs through the carousel, the data on the bag tag 305 cross references with the travel control system database. The travel control system database is integrated to the airport control systems 160, and identifies the baggage as a virtual interline bag that needs special side loading in the Airport baggage sorting system.
      ii. The airport control systems 160 of the departure airport 210 therefore automatically instructs the BHS of the departure airport 210 to sort the baggage to the re-labelling station 405, operated by the departure airport personnel where crew can manually address the airport control systems specific requirement of the handling of the baggage as a non-direct bag, but as a transfer bag. (check / control data is available through a travel control system app provided to the BHS staff if necessary)
      iii. The BHS staff at the departure airports relabeling station 405 attach a special transfer bag label 415 and thereby indicate that the baggage requires that the baggage is put into the transfer baggage compartment of the airplane 220 baggage space.
6. The baggage 200 is then put back on the belt 406 in departure airport 210 and sorted by the baggage handling system (BHS) to the correct pier/gate in the departure airport.
7. The baggage 200 is placed on the airplane 220 as a transfer bag and the airplane leaves for transit airport 230.
8. At the transit airport 230, a ground handler sees the transfer bag label 415 and takes the baggage 200 to the transfer BHS 408. At the BHS, the airport control systems 160 knows the status of the baggage 200 due to travel control system 120 integration with airport control system 160 at the transit airport 230. However, the airport control system 160 has been instructed by the travel control system 120 to sort the baggage to the relabelling station 409.
9. The baggage is sorted by the BHS 408 to the manual relabelling station 409, where the crew identifies the baggage as a transfer bag that needs manual handling by special procedure.
10. Staff at the relabeling station 409 rips up the existing tags, and places a direct-flight bag tag 305 for the connecting flight 240. The flight data is retrieved through the travel control system integration with the passenger data 303 from the passenger name record (i.e. the crew at the relabeling station essentially checks the passengers in again).
11.The travel control system 120 informs the passenger 102 of the new bag tag ID via an email or an SMS text message 411.
12.The baggage 200 is sorted and transported to a belt 412 to the correct pier/gate/ as a direct flight baggage.
13.The baggage is loaded on to the airplane 240 as direct baggage.
14.The passenger 102 arrives in the destination airport 250, and the baggage 200 is sent to arrival where the passenger 102 picks up the baggage 200 at the arrival carousel 414.

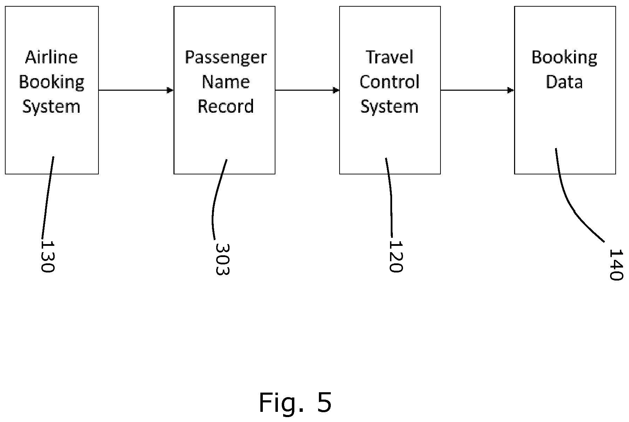

Figure 5 illustrates that when a journey has been ordered, the airline booking system 130 for each flight transmits the passenger data 303, usually in form of a passenger name record, from the airline booking system 130 to the travel control system 120, where the passenger data 303 from the passenger name record is stored in the booking data 140.

The invention can be implemented by means of hardware, software, firmware or any combination of these. The invention or some of the features thereof can also be implemented as software running on one or more data processors and/or digital signal processors.

The individual elements of an embodiment of the invention may be physically, functionally and logically implemented in any suitable way such as in a single unit, in a plurality of units or as part of separate functional units. The invention may be implemented in a single unit, or be both physically and functionally distributed between different units and processors.

Although the present invention has been described in connection with the specified embodiments, it should not be construed as being in any way limited to the presented examples. The scope of the present invention is to be interpreted in the light of the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A method for transfer of baggage (200) between connecting flights (220, 240), wherein a passenger (102) books a journey (100) and check-in at a departure airport (210), shifts to a connecting flight (240) at one or more transit airport(s) (230) and completes the journey (100) at a destination airport (250), and
the passenger (102) check-in the baggage (200) before the journey at the departure airport (210) or remotely and collects the baggage after the journey,
wherein,
the journey (100) comprises transfer of baggage (200) at the one or more transit airport(s) (230) between connecting flights (220, 240) from at least two airlines (135, 136) not having an arrangement for baggage check-through,
the method comprises:
- providing a computer-implemented travel control system (120),
- receiving booking information (115) of a journey (100) from a booking portal (110), or any other source generating booking information (115), connected to the computer-implemented travel control system (120),
- receiving, when the journey (100) is booked, passenger data (303) generated for each connecting flight (220, 240) by the respective airlines (135, 136),
- storing the booking information (115) and the passenger data (303) in the travel control system (120), and
- updating one or more databases (155, 165, 175) for a departure control system (150) and/or airport control systems (160, 170) at the departure airport (210) and/or the one or more transit airport(s) (230) with booking data (140) comprising the passenger data (303).

2. The method according to claim 1, wherein the method further comprises,
- that at check-in the baggage (200) is tagged with a bag tag (305), and
- the bag tag (305) comprises information indicating baggage transfer towards the destination airport (250).

3. The method according to claims 2, wherein the bag tag (305) comprises information indicating baggage transfer through the one or more transit airport(s) (230) to the destination airport (250).

4. The method according to claims 1-3, wherein the databases (155, 165) at the departure airport (210) after the journey (100) is booked is updated with the booking data (140) from the travel control system (120), including check-through requirement for the one or more transit airport(s) (230).

5. The method according to claim 2, wherein the bag tag (305) comprises information for transfer of the baggage (200) to the next airport of the one or more transit airport(s) (230), and the baggage (200) is labelled with a transfer bag label (415), the transfer bag label (415) indicates that the baggage (200) is a transfer bag, and at the one or more transit airport(s), (230) the baggage (200) labelled with the transfer bag label (415), is tagged with a bag tag (305) for the next airport on the journey (100) of the passenger (102).

6. The method according to claim 5, wherein at the one or more transit airport(s) (230), if the baggage (200) is labelled with a transfer bag label (415) and the next airport is the destination airport (250), the transfer bag label (415) is removed and the baggage (200) is tagged by the bag tag (305) as direct baggage.

7. The method according to any of the claims 1-2, 5 or 6, wherein the databases (155, 165, 175), comprising data for the airport control system (160, 170) of the baggage handling systems (180, 190) at the departure airport (210) and/or the one or more transit airport(s) (230), are updated with the booking data (140) comprising the passenger data (303) from the travel control system (120) after the journey (100) is booked .

8. The method according to any of the claims 5-7, wherein at the one or more transit airport(s) (230), if the baggage (200) is labelled with a transfer bag label (415) and the next airport is another of the one or more transit airport(s) (230), the baggage (200) remains labelled as transfer baggage with the transfer bag label (415) or is relabelled with another transfer bag label (415).

9. The method according to any of the claims 5-8, wherein at the departure airport (210), the airport control system (170) identifies the baggage (200) as transfer baggage needing a transfer bag label (415); the baggage (200) is transferred to a relabelling station (405, 409) to be labelled with a transfer bag label (415).

10. The method according to any of the claims 5-9, wherein at arrival at the one or more transit airport(s) (230) the baggage (200) labelled with the transport bag label (415) is transported to the relabelling station (405, 409), where the baggage (200) is tagged with a bag tag (305) for the next airport.

11. The method according to any of the claims 5-10, wherein at the transfer baggage handling system (BHS, 190), the airport control system (160) identifies the baggage (200) for relabelling and the baggage (200) is transferred to the relabelling station (409).

12. The method according to any of the claims 9-11, wherein at the relabelling station (409) a bag tag (305) for the next airport is written, based on information in the passenger data (303), and tagged to the baggage (200).

13. A computer-implemented travel control system (120), wherein the travel control system (120) is arranged to support the transfer of baggage (200) between connecting flights (220, 240), wherein a passenger (102) books a journey (100) and check-in at a departure airport (210), shifts to a connecting flight (220, 240) at one or more transit airport(s) (230) and completes the journey (100) at a destination airport (250), and
the passenger (102) check-in the baggage (200) before the journey at the departure airport (210) or remotely and collects the baggage after the journey,
the journey (100) comprises transfer of baggage (200) at the one or more transit airport(s) (230) between connecting flights (220, 240) from at least two airlines not having an arrangement for baggage check-through,
wherein the travel control system (120) is further arranged to support:
- receiving booking information (115) of a journey (100) from a booking portal (110), or any other source generating booking information (115), connected to the travel control system (120),
- receiving, when the journey (100) is booked, passenger data (303) generated for each connecting flight (220, 240) by the respective airlines (135, 136),
- storing the booking information (115) and the passenger data (303) in the travel control system (120), and
- updating one or more databases (155, 165, 175) for a departure control system (150) and/or airport control systems (160, 170) at the departure airport (210) and/or the one or more transit airport(s) (230) with booking data (140) comprising the passenger data (303).

14. The computer-implemented travel control system according to claim 13, wherein the databases (155, 175) for the departure control system (150) and/or airport control systems (160) at the departure airport - after the journey (100) is booked - from the travel control system (120) are updated with the booking data (140), comprising check-through requirement for the one or more transit airport(s) (230).

15. The computer-implemented travel control system according to claim 13, wherein the databases (165, 175) of the airport control systems (160, 170) of the baggage handling systems (180, 190) at the departure airport (210) and the one or more transit airport(s) (230) are updated - after the journey (100) is booked - with the booking data (140), comprising the passenger data (303), from the travel control system (120).

16. A computer program for a travel control system comprising instructions which, when the program is executed by a computer, cause the computer to carry out running a travel control system (120) arranged to support the transfer of baggage (200) between connecting flights (220, 240), wherein a passenger (102) books a journey (100) and check-in at a departure airport (210), shifts to a connecting flight (220, 240) at one or more transit airport(s) (230) and completes the journey (100) at a destination airport (250), and the passenger (102) check-in the baggage (200) before the journey at the departure airport (210) or remotely and collects the baggage after the journey,
the journey (100) comprises transfer of baggage (200) at the one or more transit airport(s) (230) between connecting flights (220, 240) from at least two airlines (135, 136) not having an arrangement for baggage check-through,
wherein the travel control system (120) is further arranged to support:
- receiving booking information (115) of a journey (100) from a booking portal (110), or any other source generating booking information (115), connected to the travel control system (120),
- receiving, when the journey (100) is booked, passenger data (303) generated for each connecting flight (220, 240) by the respective airlines (135, 136),
- storing the booking information (115) and the passenger data (303) in the travel control system (120), and
- updating one or more databases (155, 165, 175) for a departure control system (150) and/or airport control systems (160, 170) at the departure airport (210) and/or the one or more transit airport(s) (230) with booking data (140) comprising the passenger data (303).

17. A computer program for a booking portal comprising instructions which, when the program is executed by a computer, cause the computer to interacts with a computer-implemented travel control system (120) arranged to support the transfer of baggage (200) between connecting flights (220, 240), wherein a passenger (102) books a journey (100) and check-in at a departure airport (210), shifts to a connecting flight (220, 240) at one or more transit airport(s) (230) and completes the journey (100) at a destination airport (250), and
the passenger (102) check-in the baggage (200) before the journey at the departure airport (210) or remotely and collects the baggage after the journey,
the journey (100) comprises transfer of baggage (200) at the one or more transit airport(s) (230) between connecting flights (220, 240) from at least two airlines not having an arrangement for baggage check-through,
wherein the travel control system (120) is further arranged to support:
- receiving booking information (115) of a journey (100) from a booking portal (110), or any other source generating booking information (115), connected to the travel control system (120),
- receiving, when the journey (100) is booked, passenger data (303) generated for each connecting flight (220, 240) by the respective airlines (135, 136),
- storing the booking information (115) and the passenger data (303) in the travel control system (120), and
- updating one or more databases (155, 165, 175) for a departure control system (150) and/or airport control systems (160, 170) at the departure airport (210) and/or the one or more transit airport(s) (230) with booking data (140) comprising the passenger data (303).
